# EUROPEAN PATENT APPLICATION

(11) **EP 1 715 563 A1**
(43) Date of publication of application: **25.10.2006**
(21) Application number: 05700431.9
(22) Date of filing: 14.01.2005
(51) Int. Cl.: H02K 7/00

(54) **THE THREE-PHASE AC SPEED ADJUSTABLE MOTOR**

(30) Priority: 18.01.2004 CN 200410021695
(71) Applicant: Wu, Jialin, Chengdu, Sichuan 610000 (CN)
(72) Inventor: Wu, Jialin, Chengdu, Sichuan 610000 (CN)
(74) Representative: Epping - Hermann - Fischer
(86) International application number: PCT/CN2005/000057
(87) International publication number: WO 2005/074104

(57) **Abstract**

A three-phase AC speed adjustable motor relates to the motor speed adjusting technique in the field of electrical engineering. Said three-phase AC speed adjustable motor is composed of an AC motor body and an inverse electromotive force generator which is connected with ends of the three stator windings of the AC motor body, wherein the DC voltage, output voltage and the output phase of the inverse electromotive force generator are variable. Instead of adjusting the speed of a motor by extracting energy from the motor and then returning the extracted energy back to the electric network in prior art, the present invention alter the ideal non-load angular speed to adjust the speed of a motor by applying an inverse electromotive force to the motor to counteract a part of energy of the motor and to control the magnitude of the DC voltage. Compared with the prior art, the stage-change step that energy is extracted from a motor and then returned back to the electric network is avoided, therefore energy is saved and various undesirable influences to the network can be avoided. Its structure is simpler and its construction is easier, so the cost of manufacture and use is greatly reduced.

## Description

### Technical Field

The present invention relates to a motor speed adjusting technique in the field of electrical engineering.

### Background Art

A motor is a device for "mechanical energy-electrical energy-mechanical energy" conversion, and most motors have reversibility. Current motors mainly include synchronous motors and asynchronous motors, both of them can be used as generators ("mechanical energy-electric energy") or electromotors ("electric energy-mechanical energy"). When they are used as generators, their respective output frequencies is proportional to their respective rotation speeds, so if a fixed frequency AC is to be output, the change in their respective rotation speeds must be within a relatively small range irrespective of the load. Generally, the energy resource consumed by such devices for converting between mechanical energy and electrical energy is proportional to the rotation speeds of said devices, thus no matter water power generation, thermal power generation, wind power generation or oil fired generation, they all have considerable loss of energy resource. When a motor is used as an electromotor, speed adjusting is usually required.

Currently there are many methods available for adjusting speed, such as variable velocity variable frequency, but a defect of such a variable velocity variable frequency is that the circuitry structure is complex, and the cost will be high if high performance control is required; and the performance cost ratio is not ideal especially for high-power equipments. As for an asynchronous motor, internal feedback speed adjusting, variable voltage speed adjusting, water resistance speed adjusting or fluid-force coupler and electromagnetic speed regulator can be used for speed adjusting, but such kind of speed adjusting techniques are low efficiency speed adjusting. The operational principle of the internal feedback speed adjusting, for example, is that extracting redundant energy from a motor to adjust the speed, and the extracted energy is then returned to the electric network. For example, the "cascade speed regulator for a squirrel cage asynchronous motor" as disclosed in Chinese Patent CN2244266 is constructed by connecting the stator windings of a squirrel cage asynchronous motor to a deflector composed of a three-phase rectification bridge, a smoothing reactor, a three-phase inverse bridge and a transformer. By adjusting the trigger angle of the three-phase inverse bridge, the redundant energy that is input to the motor is feedback to the electric network via the deflector to realize speed adjusting. However, there are many problems during the application of such kind of speed-adjustable motors, such as the return of extracted energy to the electric network imposes a great interference on the electric network, thus resulting in harmonic wave pollution. Moreover, the stage-change step of extracting energy from a motor and returning it to the electric network results in a waste of energy resource.

### Summary of the Invention

The object of the present invention is to overcome the above-mentioned defects of the prior art by providing a three-phase AC speed adjustable motor with a simple structure, high energy efficiency and high performance cost ratio.

The object of the present invention is achieved by a technical means of applying an inverse electromotive force to a common motor.

The three-phase AC speed adjustable motor of the present invention is composed of an AC motor body and a three-phase inverse electromotive force generator, which is connected with ends of three stator windings of the AC motor body, wherein the DC voltage, the output voltage and the output phase of the three-phase inverse electromotive force generator are variable.

The working principle of the three-phase AC speed adjustable motor is as following:
As we know, a motor can be used as both an electromotor and a generator by altering the ideal non-load angular speed thereof. When the ideal non-load angular speed of a motor is higher than its actual angular speed, electric energy is input and mechanical energy is output, so the motor becomes an electromotor; and when the ideal non-load angular speed of a motor is lower than its actual angular speed, mechanical energy is input and electrical energy is output, so the motor becomes a generator. The three-phase AC speed-adjustable motor of the present invention gets energy from the electric network and transfers the energy to the inverse electromotive force generator to make it work. Under an electromotor state, the inverse electromotive force generator generates an adjustable inverse electromotive force opposite to voltage of the motor and applies it to the motor to counteract a part of the energy applied to the motor by the electric network, thereby adjusting the current of the motor. The ideal non-load angular speed of the motor can be adjusted by adjusting the DC voltage of the inverse electromotive force, thus the object of speed adjusting is achieved. When the motor works under a generator state, the amount of electric energy output can be adjusted by adjusting the difference between the ideal non-load angular speed and the motor's actual angular speed with the inverse electromotive force generator. Since the stator windings of the motor always remain connected to the AC electric network and here is not any frequency change, it can be ensured that the frequency of the stator windings remain unchanged regardless of any rotation speed change by adjusting with the inverse electromotive force generator, thus a speed adjustable generator with constant frequency is formed. The power factor of the motor can be changed by changing the phase of the three-phase inverse electromotive force, thereby improving the operation efficiency of the motor.

Said three-phase AC speed adjustable motor can be made as a squirrel cage asynchronous motor or a synchronous motor. For a motor with such kind of structure, the AC motor body is a squirrel cage asynchronous motor or a synchronous motor body, and the inverse electromotive force generator is composed of a three-phase inverter, that is, the originally connected ends (x), (y) and (z) of the three stator windings of the prior art squirrel cage asynchronous motor or synchronous motor are disconnected and then connected one-to-one to the three incoming ends (U), (V), and (W) of the three-phase inverter to reform the electrical passageway of the stator windings. The phase angle and magnitude of current voltage on the stator windings, and the magnitude of the charging voltage applied to the capacitor of the three-phase inverter will all be changed by adjusting the order and time of switching on and off the three-phase inverter, i.e., by changing the pulse width of the output voltage thereof, said capacitor can be charged and then discharged by means of the phase difference change of the inverter, the ideal non-load angular speed can be indirectly changed by controlling the magnitude of the DC voltage. The inverter is made to generate an inverse electromotive force to be applied to the motor winding when the capacitor discharges, and the voltages at two ends of the stator winding can be controlled by controlling the magnitude of the inverse electromotive force so as to counteract a part of the energy applied to the motor by the electric network.

The three-phase AC speed adjustable motor of the present invention also can be made as a winding rotor asynchronous motor. For a motor with such a structure, the AC motor body thereof is a winding rotor asynchronous motor body, the inverse electromotive force generator is composed of a three-phase inverter and a rectifier, ends (x), (y) and (z) of the three stator windings of said motor body are connected one-to-one to three incoming ends (U), (V) and (W) of the three-phase inverter, and the input ends of the rectifier are respectively connected to the three rotor slip rings (A1), (A2), (A3) of the AC motor, and the output ends of the rectifier are connected to the DC end of the inverter. During operation, the induction electromotive force in the rotor winding is input through the slip ring to the rectifier which rectifies AC to DC and supplies it to the three-phase inverter, and the inverter generates a inverse electromotive force to be applied to the stator windings of the motor at the same time as it inverts DC to AC. The rotor winding of the winding rotor asynchronous motor also can be shortcircuited to form a common asynchronous motor, thus the object of speed adjusting is achieved.

As for a high voltage motor such as a 6KV, 10KV motor, said inverse electromotive force generator can be composed of a three-phase transformer and a three-phase inverter, wherein the secondary sides of the transformer are connected to three stator windings respectively, and the primary sides of the transformer are connected to the three incoming ends of the inverter respectively. The connection and voltage matching between the stator windings and the inverter are achieved by the transformer, thus resulting in an advantage that a low voltage inverter can be used to control a high voltage motor and the cost is greatly reduced.

Instead of adjusting the speed of a motor by extracting energy from the motor and then returning the extracted energy back to the electric network in prior art, the present invention indirectly alter the ideal non-load angular speed to adjust the speed of a motor by applying an inverse electromotive force to the motor to counteract a part of energy of the motor and to control the magnitude of the DC voltage. Compared with the prior art, the stage-change step that energy is extracted from a motor and then returned to the electric network is avoided, therefore energy is saved and various undesirable influences to the network can be avoided. Its structure is simpler and its construction is easier, so the cost in manufacturing and using it is greatly reduced, and the performance cost ratio is greatly improved. Especially when it is used as a generator, since the frequency of generated electricity is not influenced by the rotation speed, very complicated and expensive frequency conversion means in the prior art can be saved. With such a characteristic, the rotation speed of a generator can be adjusted according to the load during thermal power generation and water power generation, thereby the object of saving energy is achieved. When it is used in wind power generation, since the range of the rotation speed is enlarged, the amount of electrical energy output of the motor can be increased.

The present invention will be further described in detail in the following text with reference to the figures, but the contents of the present invention are not limited to those involved in the embodiments.

### Description of Figures

Fig. 1 is a structural schematic of embodiment 1 of the present invention;
Fig. 2 is a structural schematic of embodiment 2;
Fig. 3 is a structural schematic of embodiment 3;
Fig. 4 is a schematic drawing of turn-on of another form of transformer;
Fig. 5 is a schematic drawing of turn-on of an autotransformer.

### Mode of Carrying out the invention

### Embodiment 1:

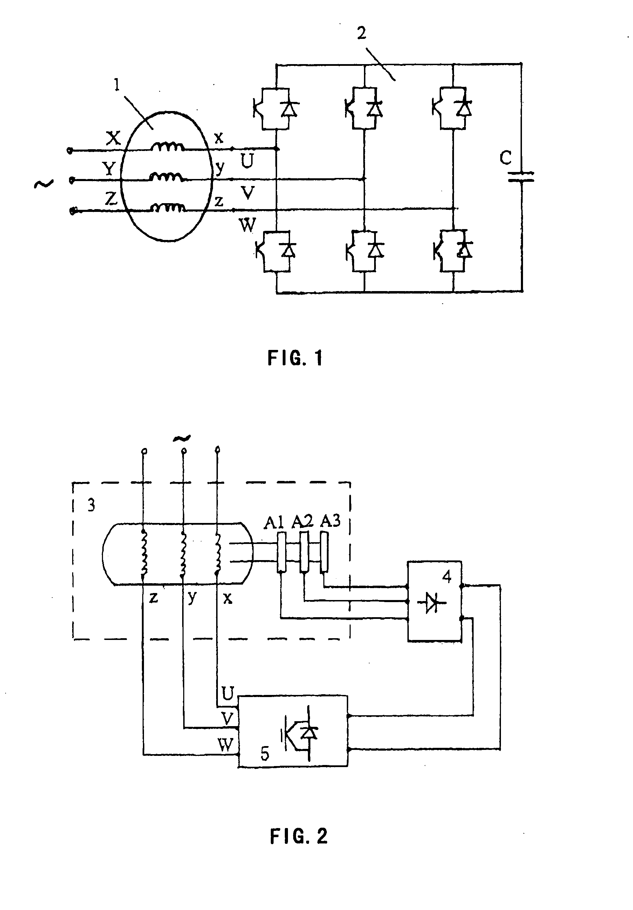

As shown in Fig. 1, the structure of a squirrel cage asynchronous motor is provided in this embodiment. The AC motor body 1 is a squirrel cage asynchronous motor or a synchronous motor body, the inverse electromotive force generator 2 is composed of a three-phase inverter, specifically, the originally connected ends (x), (y) and (z) of the three stator windings of the prior art squirrel cage asynchronous motor or synchronous motor are disconnected and then connected one-to-one to the three incoming ends (U), (V), and (W) of the three-phase inverter, besides, a capacitor C is connected to the DC end of said three-phase inverter. The three-phase inverter 2 can be a voltage-type three-phase inverter manufactured by Chengdu Jialing Electric Manufacture Corporation. AC power supply from the electric network is supplied to the inverter through the stator windings and charges the capacitor C in the inverter, the discharge of capacitor C forms an inverse electromotive force to be applied to the motor body.

### Embodiment 2:

As shown in Fig. 2, this embodiment specifically provides the structure of a winding rotor asynchronous motor, wherein the AC motor body 3 is a winding rotor asynchronous motor body, the inverse electromotive force generator is composed of a three-phase inverter 5 and a rectifier 4, ends x, y and z of the three stator windings of the motor body 3 are connected one-to-one to the three incoming ends U, V and W of the three-phase inverter 5, the input ends of the rectifier 4 are connected respectively to the three rotor slip rings A1, A2 and A3 of the AC motor, and the output ends of the rectifier are connected to the DC end of the inverter.

During operation, the induction electromotive force in the rotor winding is input through the slip ring to the rectifier which rectifies AC to DC and supplies it to the three-phase inverter, and the inverter generates an inverse electromotive force to be applied to the stator windings of the motor at the same time as it inverts DC to AC.

### Embodiment 3:

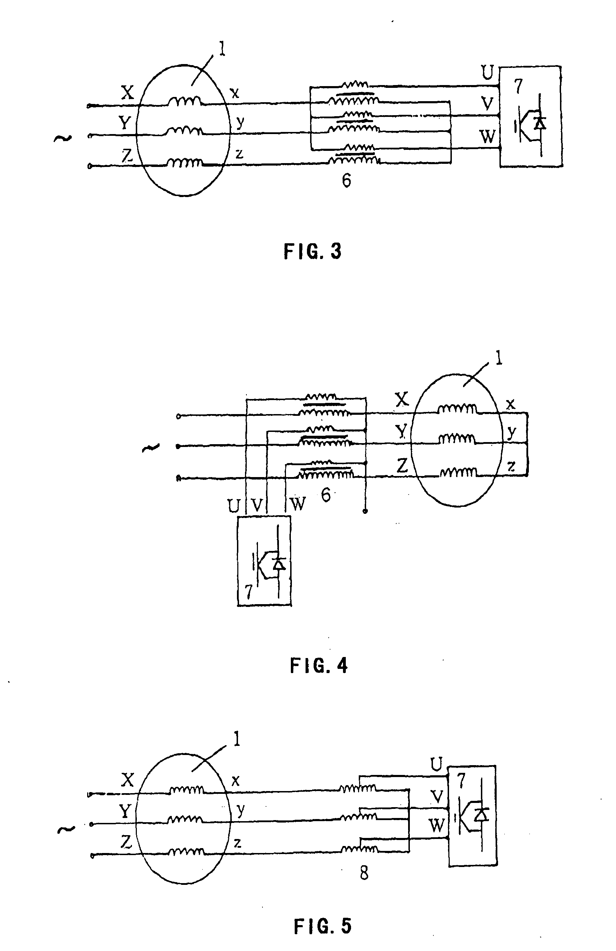

As shown in Fig. 3, this embodiment differs from previous ones in that a three-phase transformer 6 is used to connect between the three-phase inverter and the three stator windings, so the transformer realizes turn-on between the three-phase inverter and the three stator windings while matching the voltages between them. That is, said inverse electromotive force generator is composed of a three-phase transformer 6 and a three-phase inverter 7, wherein the secondary sides of the transformer are connected to ends x, y and z of three stator windings respectively, and the primary sides of the transformer are connected to the three incoming ends U, V and W of the inverter respectively.

The three incoming ends U, V and W of the three-phase inverter also can be connected to the front ends X, Y, and Z of the three stator windings by the transformer, as shown in Fig. 4.

The transformer also can be an autotransformer 8, as shown in Fig. 5.

## Claims

1. A three-phase AC speed adjustable motor, **characterized in that** said three-phase AC speed adjustable motor is composed of an AC motor body and an inverse electromotive force generator which is connected with ends of the three stator windings of the AC motor body, wherein the DC voltage, output voltage and the output phase of the inverse electromotive force generator are variable.

2. The three-phase AC speed adjustable motor according to claim 1, **characterized in that** said AC motor body is a squirrel cage asynchronous motor or synchronous motor body, said inverse electromotive force generator is composed of a three-phase inverter, and the ends (x, y, z) of the three stator windings of said motor body are connected one-to-one to the three incoming ends (U, V, W) of the three-phase inverter, and a capacitor (C) is connected to the DC end of said three-phase inverter.

3. The three-phase AC speed adjustable motor according to claim 1, **characterized in that** said AC motor body is a winding rotor asynchronous motor body, said inverse electromotive force generator is composed of a three-phase inverter and a rectifier, the ends (x, y, z) of the three stator windings of said motor body are connected one-to-one to the three incoming ends (U, V, W) of the three-phase inverter, the input ends of the rectifier are connected to the three rotor slip rings (A1, A2, A3) of the AC motor respectively, and the output ends of the rectifier are connected to the DC end of the inverter.

4. The three-phase AC speed adjustable motor according to claim 1, **characterized in that** said inverse electromotive force generator is composed of a three-phase transformer and a three-phase inverter, wherein the secondary sides of the transformer are connected to three stator windings respectively, and the primary sides of the transformer are connected to the three incoming ends of the inverter respectively.
